# EUROPÄISCHE PATENTANMELDUNG

(11) **EP 1 659 434 A1**
(43) Veröffentlichungstag der Anmeldung: **24.05.2006**
(21) Anmeldenummer: 05450187.9
(22) Anmeldetag: 16.11.2005
(51) Int. Cl.: G02B 6/38, G02B 6/43

(54) **Anschlusseinheit**

(30) Priorität: 16.11.2004 AT 19262004
(71) Anmelder: Faller, Josef, 9853 Gmünd (AT)
(72) Erfinder: Faller, Josef, 9853 Gmünd (AT)
(74) Vertreter: Hehenberger, Reinhard

(57) **Zusammenfassung**

Eine Anschlusseinheit für optische Steckverbindungen weist eine Halterung (1a) auf, an der ein erster Steckerteil (1, 5) und ein zweiter Steckerteil (7, 10) befestigbar sind. Der zweite Steckerteil (7, 10) ist an einem Träger (11, 17) befestigt. Am Träger (11, 17) ist des weiteren ein dritter Anschluss (18, 19) vorgesehen. Der zweite Steckerteil (7, 10) ist im Bereich eines Randes des Trägers (11, 17) angeordnet und zum Inneren des Trägers (11, 17) hin gewandt. Der dritte Anschluss (19, 20) ist im Bereich des gleichen Randes des Trägers (11, 17) angeordnet und vom Träger (11, 17) weg gewandt.

## Beschreibung

Die Erfindung betrifft eine Anschlusseinheit mit einer Halterung, an der ein erster Steckerteil und ein zweiter Steckerteil befestigbar sind, wobei der zweite Steckerteil an einem Träger befestigt ist und wobei ein dritter Anschluss am Träger vorgesehen ist.

Bei den optischen Übertragungsmedien bzw. den Lichtwellenleitern unterscheidet man heute zwischen Glasfasern (Glas-Lichtwellenleiter; Glass Optical Fibre), im folgenden kurz GOF bezeichnet, und Kunststoff-Lichtwellenleitern (Polymer Optical Fibre) im folgenden kurz POF bezeichnet, sowie diverse Mischformen (Hard Cladding Polymer Fiber, HCPF etc.). POF wird heute im Bereich der Industriellen Anwendung (industrielle Automation), im Bereich Automobil-Verkabelung und dem Bereich der Multimedia Technik eingesetzt.

Kunststoff-Lichtwellenleiter (POF) haben gegenüber Glasfasern andere Übertragungseigenschaften und Abmessungen. Für die Verarbeitbarkeit und die Anschlusstechnologien von Bedeutung ist der Kerndurchmesser des optischen Leiters, der bei GOF zwischen 12,5 bis 250 µm beträgt und bei POF einen Durchmesser von 250 µm bis 1000µm beträgt. Der größere Durchmesser bei POF ermöglicht vor allem eine einfache Steckermontage.

Für POF sind aus den verschiedenen Anwendungsbereichen spezielle Steckverbinder bekannt. Eine spezifische Ausführungsform von Steckverbindern benutzt so genannte Ferullen, die direkt auf den Lichtwellenleiter oder den Schutzmantel (Jacketing) befestigt werden. Es sind sowohl Ferullen aus Metall als auch aus Kunststoff bekannt.

Der Einsatz von POF bietet auf Grund seiner physikalischen Eigenschaft als galvanisch nicht leitendes Material die Möglichkeit der gemeinsamen Verlegung mit einer Netzverdrahtung der Haushalts-Stromversorgung.

In der Elektroinstallation wird die Verkabelung bzw. Verdrahtung der Netzleitungen, Telefonleitungen, Koaxialkabel oder ähnlichen Signalleitungen vielfach in unter Putz verlegte Leerrohre eingezogen.

Für die Leitungen zur Netzversorgung (110 bzw. 220 und 380V) und für Signalleitungen (Schwachstrom) wird heute eine eigene, getrennte Verrohrung ausgeführt. Es ist jedoch auch ein kombiniertes Installationskabel bekannt, in dem die Leitungen zur Netzversorgung und eine geschirmte Busleitung auf Grund einer für 220V ausgelegten Isolierung gemeinsam in einem Rohr oder als Stegleitung ausgeführt sind.

Für die kombinierte Verkabelung von Stromversorgung und POF sind erste Ausführungen kombinierter Kabel bekannt, die für die Installation mit so genannten Stegleitungen eingesetzt werden, d.h. das Kabel wird ohne Verrohrung direkt in Putz verlegt oder zum Anschluss externer Geräte verwendet.

Die Übertragung von digitalen Daten- bzw. Schwachstromsignalen erfolgt heute über Kupferkabel, Glas- oder Kunststoff-Lichtwellenleiter sowie in modulierter Form in HF-Koaxialkabeln oder drahtlos über elektromagnetische Verfahren (RF) oder über Infrarot. Weiters sind Konzepte bekannt, in denen POF parallel mit der Netzversorgung installiert werden.

Die Leitungen der Netzversorgung werden über Netzsteckdosen aus der Unterputzinstallation oder der Stegleitungsinstallation hinausgeführt bzw. bei direktem Anschluss der Verbraucher (z.B. Lichtauslass) direkt in den Verbraucher eingeleitet.

Für kombinierte Steckdosen von Netzanschluss und optischem Anschluss bzw. Medienkonverter sind Steckdosenkonzepte bekannt.

Aus der WO 00/37978 A ist eine Kombination aus Datensteckdose und Netzsteckdose bekannt. Aus der EP 0772132 A, der DE 19542167 A und der EP 0 753 906 A sind Schukosteckdosen mit einem integrierten optischen Anschluss sowie Auslässe mit Busankopplern bekannt.

Aus der US 4 864 632 A ist eine Kombination von Schwachstrom-Anschluss und Netzsteckdose bekannt.

Der Erfindung liegt die Aufgabe zu Grunde, ein einfach zu montierendes und variables Anschlusssystem für unterschiedliche, steckbare Anschlüsse von optischen Leitern, vorzugsweise POF, in einer Unterputzdose, Datenanschlussdose oder einer Montagedose zu ermöglichen. Ein optischer Anschluss soll sowohl für passive optische Anschlüsse, das bedeutet dass zwei optische Anschlüsse oder Leiter direkt über eine Steckverbindung miteinander verbunden werden, als auch für aktive optische Anschlüsse, das sind optische Medienkonverter die ein optisches Signal in ein elektrisches Signal umwandeln, geeignet sein.

Da heute unterschiedliche Steckersysteme mit unterschiedlichen Stecksichtern (Steckerausformungen) und/oder Anschlussmodulen genutzt werden, soll bei Änderung der Steckverbindung der optische Leiter nicht mehr bearbeitet oder gravierend in seiner Positionierung verändert werden. Wenn am optischen Leiter eine Ferulle befestigt wurde, sollte dieses Anschlusselelement auch für neue oder andere Steckverbindungen genutzt werden können.

Gelöst wird diese Aufgabe mit einer Anschlusseinheit mit den Merkmalen des Anspruches 1.

Bei der erfindungsgemäßen Anschlusseinheit ist an der Halterung ein erster, ortsfester Steckerteil befestigt. Diesem ortsfesten Steckerteil ist ein zweiter Steckerteil zugeordnet, der an einem Träger befestigt ist oder Teil des Trägers ist. Der Träger mit dem zweiten Steckerteil ist bei Bedarf austauschbar an der Halterung befestigt. Am Träger ist schließlich noch ein dritter Anschluss vorgesehen, der hinsichtlich der Dose, in der das Anschlusselement angeordnet ist, nach außen gewandt ist und zum Anschließen externer Kabel bzw. Peripheriegeräte dient.

Der zweite Steckerteil ist so im Bereich eines Randes des Trägers angeordnet, dass seine Steckeröffnung zum Inneren des Trägers und somit in das Innere der Dose weist. Dadurch wird ermöglicht, dass der erste Steckerteil in praktischer Weise im mittleren oder vorderen Teil der Dose angebracht werden kann, was nicht nur die Montage des Steckerteils erleichtert, sondern dadurch auch Lichtwellenleiter, bei denen ein vorgegebener Biegeradius nicht unterschritten werden darf, damit diese nicht beschädigt werden, sicher am ersten Steckerteil angeschlossen werden können. Somit wird sowohl die Montage des ersten Steckerteils erleichtert, als auch eine einfach austauschbare Anschlussmöglichkeit durch den austauschbaren Träger mit dem zweiten Steckerteil und dem dritten Anschluss geboten.

Eine bevorzugte Ausführungsform der Erfindung ist dadurch gekennzeichnet, dass der erste Steckerteil ein Trägerelement mit wenigstens zwei Ausnehmungen für Ferullen mit optischen Anschlüssen sowie ein Fixierungselement zum Festlegen der Ferullen am Trägerelement aufweist.

Als Teilkomponenten einer optischen Steckverbindung können so genannte Ferullen auf ein optisches Kabel oder einen Leiter mit unterschiedlichen Methoden befestigt werden.

In einem Trägerelement für eine optische Steckverbindung, eines optischen Daten - oder Medienkonverters können optische Kabel mit oder ohne montierten Steckerelementen oder Ferullen in unterschiedlich ausgeformten Halterungen so befestigt werden, das damit der Leiterabstand für unterschiedliche Steckergesichte gewählt und bei Bedarf auch wieder verändert werden kann.

Das Trägerelement kann in eine Unterputzdose, eine Montagedose oder in eine Halterung integriert sein oder direkt an ein Netzgerät oder eine Netzsteckdose angebracht werden oder Teil eines Montagerahmens sein.

Die Unterputzdose ist üblicherweise eine herkömmliche Kunststoffdose, wie sie in der Elektroinstallation eingesetzt wird. Eine Montagedose ist üblicherweise eine Unterputz- oder Aufputzdose mit spezifischen Eigenschaften bzw. spezifisch ausgeformten Befestigungsvorrichtungen.

Ein Netzgerät kann ein in eine Unterputzdose eingebautes Gerät zur Versorgung von aktiven Datenkonvertern, Sensoren, Aktoren oder Medienkonvertern sein. Ein Netzgerät kann auch in einen Montagerahmen für Aufputzmontage integriert werden.

Ein Montagerahmen ist üblicherweise eine Vorrichtung zur Montage von Bauteilen in einer Unterputzdose, Montagedose oder Verteilerdose.

Das Trägerelement ist so ausgeführt, dass dieses mehrere Ausnehmungen für die Fixierung von Ferullen mit optischen Anschlüssen aufweist. Die Ausnehmungen sind in unterschiedlichen Abständen angeordnet die den Abständen heute üblicher und standardisierter Stecker entsprechen. Dadurch ist es möglich, ein optisches Kabel mit optischen Anschlüssen an Steckverbinder mit unterschiedlichen Abständen anzupassen. Die Fixierungselemente sind so ausgeführt, dass sie an der Oberseite einen optischen Stecker ausgeformt haben und einfach ausgetauscht werden können. Man kann somit durch ein Set von Fixierungselementen alle gängigen Stecker mit unterschiedlichen Kontaktabständen an die erfindungsgemäße Anschlusseinheit anschließen.

Der erste Steckerteil ist derart ausgeführt, dass über ein Adapterstück eine passive Steckverbindung zwischen zwei optischen Leitern bzw. Anschlüssen hergestellt werden kann oder wahlweise ein aktiver Medienkonverter mit einem dem Steckergesicht entsprechenden optischen Sender und Empfängermodul an den ersten Steckerteil angeschlossen werden kann.

In einer Variante kann die Vorrichtung für eine Kombination eines galvanisch-optischen Anschlusses ausgeführt sein.

Für den Einsatz von aktiven Medienkonvertern werden die optischen Sender und Empfänger so in Module integriert, dass das Modul steckbar am oben beschriebenen Trägerelement montiert werden kann.

Die Vorrichtung zur flexiblen Befestigung von Lichtwellenleitern mit optischen Ferullen, die variabel in unterschiedlichen Abständen in einem Trägerelement befestigt werden können, ermöglicht die Änderung von Steckverbindungen ohne dass der optische Leiter dabei beschädigt oder mechanisch bearbeitet werden muss. Dadurch wird eine Verletzungsgefahr der bzw. Beschädigung der Leitungen, in erster Linie der optischen Leitungen, stark reduziert bzw. verhindert. Zudem wird durch eine solche Ausführung eine zukunftssichere Vormontage ermöglicht.

Durch die beschriebene Ausführung des optischen Anschlusses kann ohne zusätzlichen Montageaufwand, durch einfachen Austausch eines modularen Elementes, für den Benutzer ein passiver Anschluss zu einem aktiven Anschluss erweitert werden oder umgekehrt, ein aktiver Anschluss in einen passiven Anschluss umgeändert werden.

Durch eine spezifische Ausführungsform der aktiven Module und die spezifische Integration der optischen Sender und Empfänger, können aktive Medienkonverter einfach in Unterputzdosen oder Montagerahmen befestigt werden, ohne das dabei der optische Leiter bewegt oder manipuliert wird.

Bevorzugte Ausführungsformen der Erfindung sind Gegenstand der übrigen Unteransprüche.

Weiter Merkmale und Vorteile der Erfindung ergeben sich aus der nachfolgenden Beschreibung bevorzugter Ausführungsbeispiele der Erfindung unter Bezugnahme auf die Zeichnungen.

Es zeigt:
- Fig. 1: ein Trägerelement für die Montage von Ferullen;
- Fig. 2: eine Ausführungsform eines Fixierungselements;
- Fig. 3: beispielhaft eine weitere Ausführungsform eines Fixierungselementes;
- Fig. 4: beispielhaft eine dritte Ausführungsform eines Fixierungselementes;
- Fig. 5: beispielhaft einen Schnitt durch ein mit eingesetzter Ferulle und befestigtem Fixierungselement;
- Fig. 6: beispielhaft einen Schnitt durch ein Trägerelement mit eingesetzter Ferulle und befestigtem Fixierungselement sowie einem Steckadapter;
- Fig. 7: eine Darstellung entsprechend Fig. 6 aber mit einem angeschlossenen optischen Kabel;
- Fig. 8: beispielhaft einen Schnitt durch ein Trägerelement mit eingesetzter Ferulle und befestigtem Fixierungselement sowie schematische einen aktiven Medienkonverter;
- Fig. 9: eine Darstellung entsprechend Fig. 8 aber mit einem angeschlossenen Medienkonverter;
- Fig. 10: in schematischer Darstellung die Draufsicht auf ein Trägerelement mit einem angesteckten aktiven Modul;
- Fig. 11: einen Schnitt durch Fig. 10;
- Fig. 12: in schematischer Darstellung die Draufsicht auf eine Halterung mit einem Trägerelement;
- Fig. 13: einen Schnitt durch Fig. 12;
- Fig. 14: eine Ansicht entsprechend Fig. 12 aber mit einer eingesetzten Platine;
- Fig. 15: einen Schnitt durch Fig. 14;
- Fig. 16: eine Ansicht entsprechend Fig. 12 aber mit einem einge- setzten Träger für optische Anschlüsse;
- Fig. 17: einen Schnitt durch Fig. 16;
- Fig. 18: in schematischer Darstellung eine Unterputzdose oder Montagedose mit einer Halterung und einem Trägerelement für optische Anschlüsse und Datenmodule;
- Fig. 19: einen Schnitt durch Fig. 18; und
- Fig. 20: in schematischer Darstellung eine Unterputzdose oder Montagedose mit einer erfindungsgemäßen Anschlusseinheit mit einem eingesetzten Träger für optische Anschlüsse.

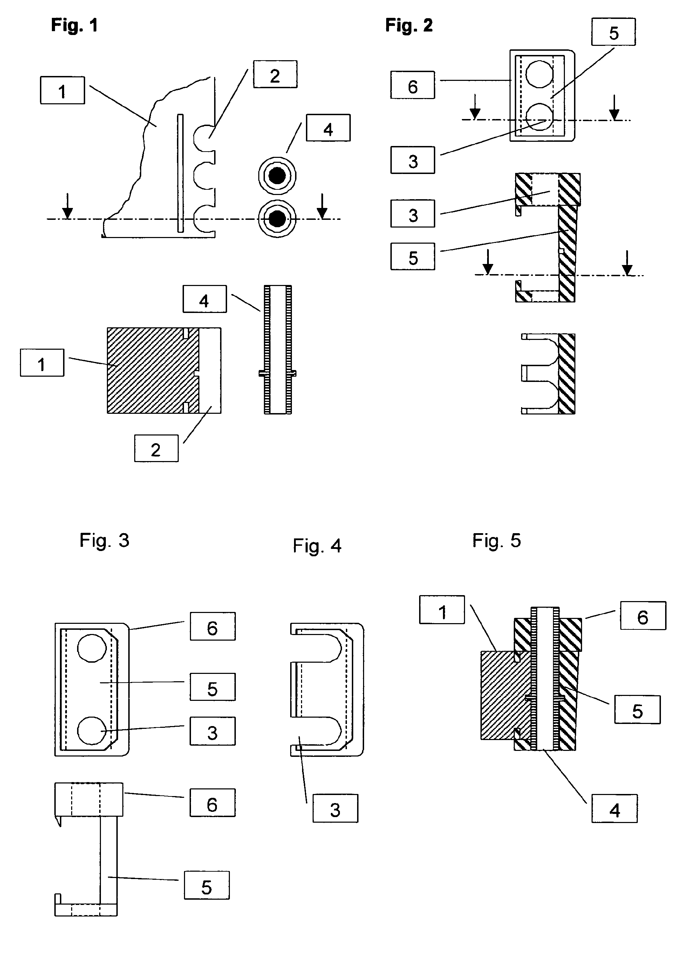

In Fig. 1 ist ein Trägerelement 1 mit drei Ausnehmungen 2 für die Montage von zwei Ferullen 4 mit einem optischen Anschluss dargestellt, und zwar im oberen Teil von Fig. 1 in Ansicht und im unteren Teil im Schnitt. Fig. 2 zeigt eine Ausführungsform eines Fixierungselements 5 mit ausgeformtem Steckergesicht 6 wie z.B. einen SMI - Stecker und Ausnehmungen 3 für die Ferullen 4. Im oberen Teil von Fig. 2 ist das Fixierungselement 5 wiederum in Ansicht dargestellt, wogegen darunter ein Schnitt durch die obere Ansicht und nochmals darunter ein Schnitt durch den mittleren Schnitt gezeigt ist.

Fig. 3 zeigt beispielhaft eine weitere Ausführungsform eines Fixierungselementes 5 mit ausgeformtem Steckergesicht 6, wie z.B. einen PN 07 - Stecker, und den Öffnungen für Ferullen 4 und Fig. 4 eine dritte Ausführungsform eines Fixierungselementes 5.

Da das Trägerelement 1 drei Ausnehmungen 2 mit unterschiedlichen Abständen aufweist, können die beiden Ferullen 4 je nach anzusteckender Steckerform bzw. Steckergesicht in die passenden Ausnehmungen 2 eingesetzt und anschließend mit einem Fixierungselement 5 mit ebenfalls passendem Steckergesicht fixiert werden. Das Fixierungselement 5 kann in einer Ausführungsform auch Teil eines aktiven Datenmoduls 11 oder einer Trägerplatte 17 sein.

Fig. 5 zeigt beispielhaft einen Querschnitt eines Trägerelementes 1 mit eingesetzter Ferulle 4 und befestigtem Fixierungselement 5.

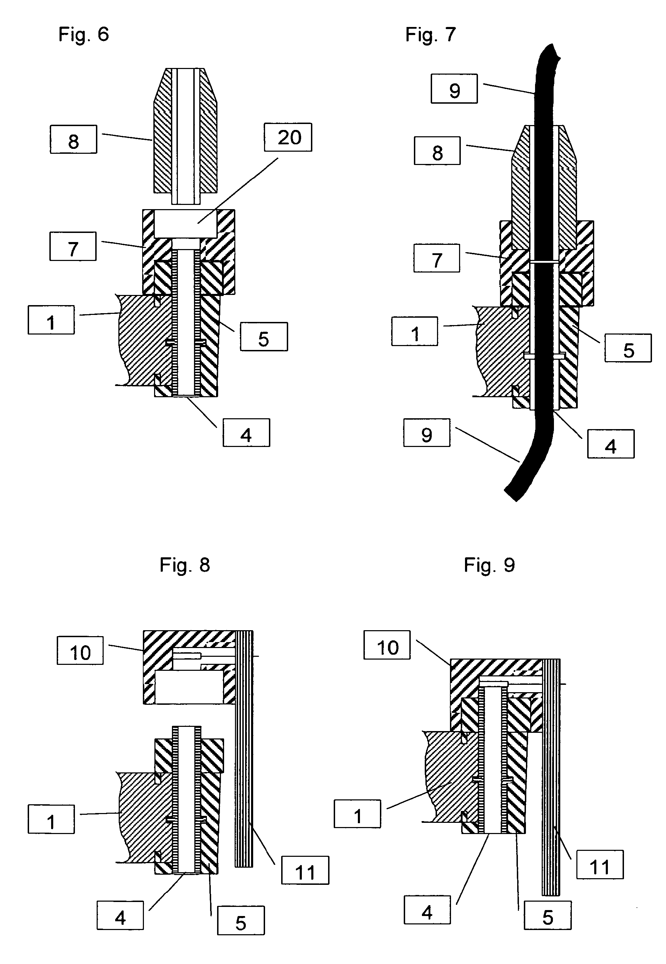

Fig. 6 zeigt beispielhaft einen Querschnitt eines Trägerelementes 1 mit eingesetzter Ferulle 4 und befestigtem Fixierungselement 5 sowie einem Steckadapter 7 mit einer Öffnung bzw. einem Anschluss 20 für einen nicht eingesteckten Steckeranschluss 8. In Fig. 7 ist der Steckeranschluss 8 mit einem angeschlossenem optischen Kabel 9 in den Anschluss 20 eingesteckt.

Fig. 8 zeigt beispielhaft einen Schnitt durch ein Trägerelement 1 mit eingesetzter Ferulle 4 und befestigtem Fixierungselement 5 sowie einer Platine 11 mit einem aktiven Medienkonverter. Der Stecker bzw. das Interface 10 des Medienkonverters ist ein nach innen zur Platine hin gerichteter optischer Sender und Empfänger. Fig. 9 zeigt die Teile von Fig. 8 im zusammengefügten Zustand.

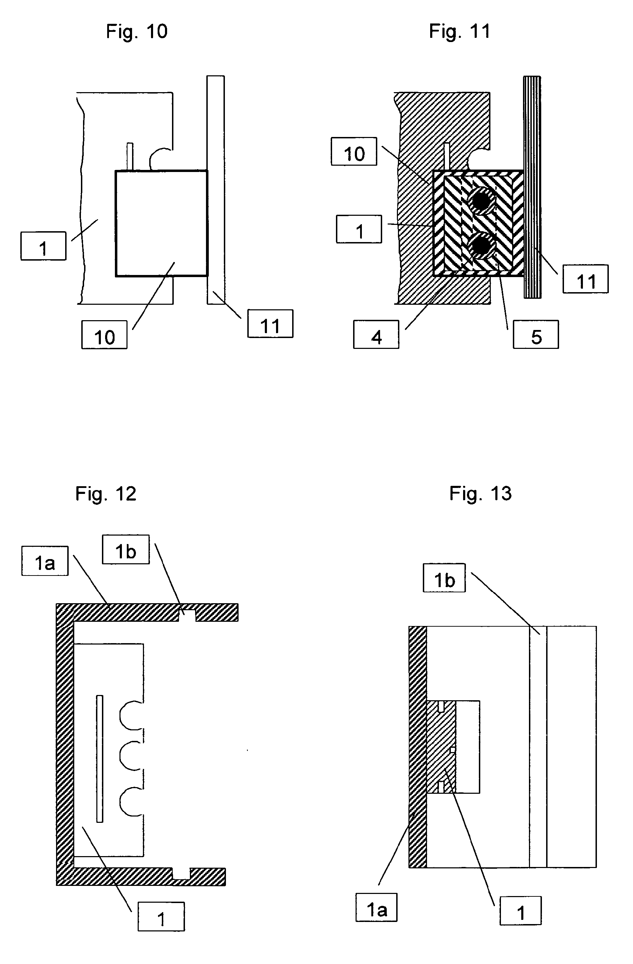

Fig. 10 zeigt in schematischer Darstellung die Draufsicht auf ein Trägerelement 1 (die eingebauten Ferullen 4 und das Fixierungselement 5 sind nicht sichtbar) sowie eine über den optischen Sender und Empfänger 10 angesteckte Platine 11 mit einem aktiven Modul, das vorzugsweise als Medienkonverter ausgeführt ist.

Fig. 11 schematisch einen Schnitt durch ein Trägerelement 1 mit eingesetzten Ferullen 4 und Fixierungselement 5 sowie Teile des als steckbares Gegenstück ausgeführten optischen Sender und Empfänger 10 in Baueinheit mit einer Platine 11 bzw. einem aktiven Datenmodul das vorzugsweise als Medienkonverter ausgeführt ist.

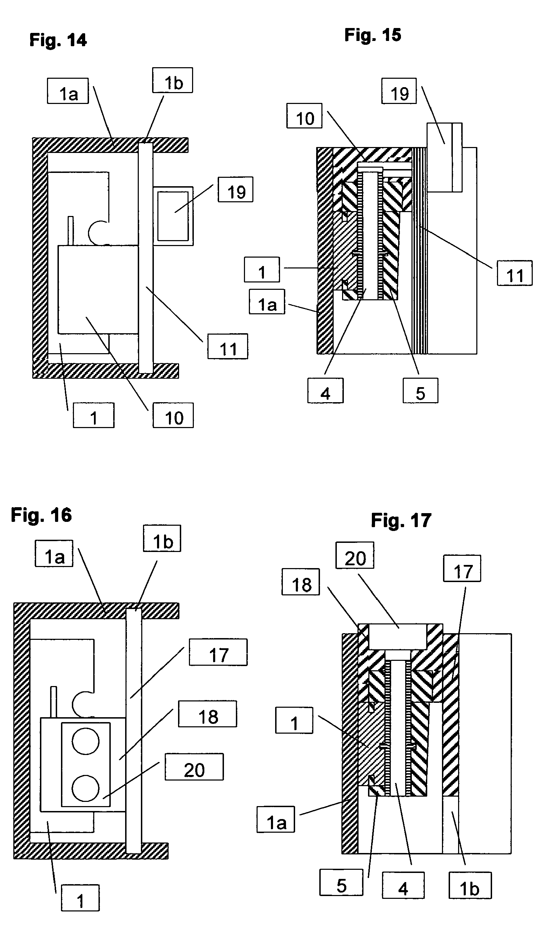

Die Fig. 12 und 13 zeigen in schematischer Darstellung in Draufsicht und im Schnitt ein Trägerelement 1, das an einer Halterung 1a befestigt ist. An der Halterung 1a ist eine Befestigungseinrichtung 1b in Form von zwei gegenüber liegenden Nuten angeordnet, in welche ein Träger, z.B. in Form einer Platine 11 für einen optischen Medien-oder Datenkonverter, eingesteckt werden kann. Durch diese Fixierung des Trägers 11, an dem der Stecker 10 befestigt ist, werden die Ferullen am Trägerelement 1 zusätzlich in ihrer Position arretiert, wie z.B. in den Fig. 14 und 15 genauer dargestellt ist.

Die Fig. 14 und 15 zeigen das Trägerelement 1 mit der Halterung 1a für die optischen Anschlüsse und der in die Befestigungseinrichtung 1b eingesetzten Platine 11 für einen optischen Medien- oder Datenkonverter mit einem zur Platineninnenseite gerichteten optischen Interface 10 und einem nach außen gerichteten Daten-Interface 19, durch welches die nicht sichtbaren optischen Anschlüsse 5 zusätzlich in ihrer Position arretiert werden.

In Fig. 16 und 17 ist eine Ausführungsform dargestellt, bei der ein optischer Steckadapter 18 an einem plattenförmigen Träger 17 befestigt oder an diesem ausgeformt ist. Der plattenförmige Träger 17 ist in die Nuten 1b eingesteckt, wodurch wiederum die Ferullen 4 zusätzlich in ihrer Position arretiert werden.

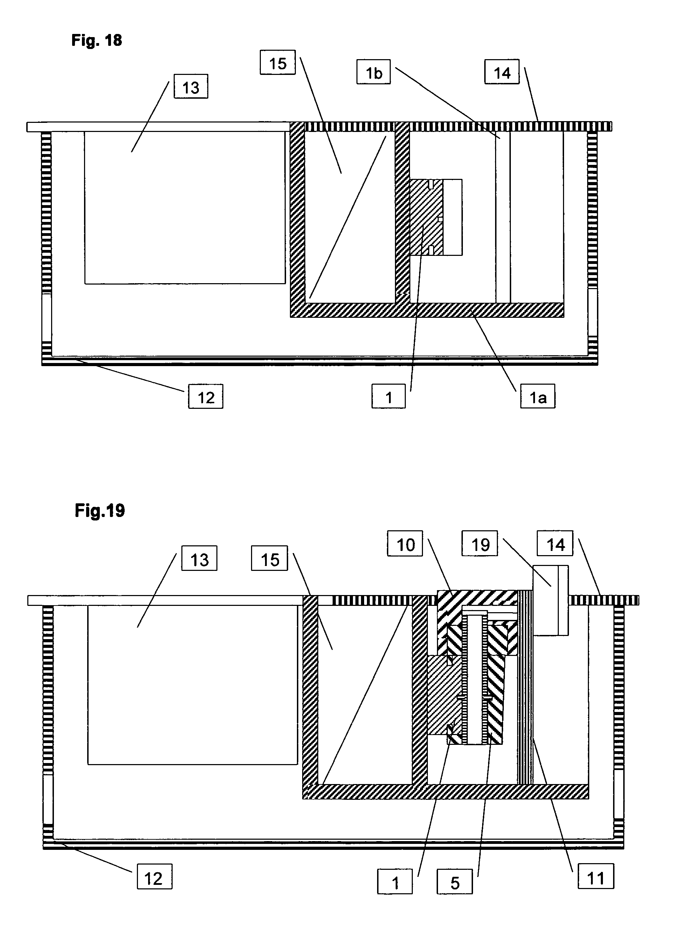

Fig. 18 zeigt in schematischer Darstellung eine Unterputzdose oder Montagedose 12 mit symbolischer Darstellung einer Netzsteckdose 13 und eines Befestigungsrahmen 14 und einem angefügten Netzgerät 15 mit einem Trägerelement 1 für einen optischen Anschluss, einer Halterung 1a sowie eine Befestigungseinrichtung 1b für ein aktives oder passives Anschlussmodul.

Fig. 19 zeigt die Unterputzdose oder Montagedose 12 mit einem eingesetzten Medienkonverter auf einer Platine 11 mit nach innen gerichtetem optischen Interface 10 und nach außen gerichteten Daten-interface 19.

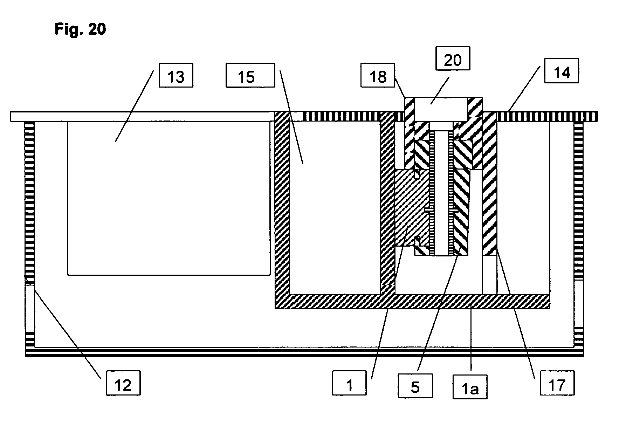

Fig. 20 zeigt die Unterputzdose oder Montagedose 12 aus Fig. 18 mit einem eingesetzten optischen Anschlussadapter 18.

## Patentansprüche

1. Anschlusseinheit mit einer Halterung (1a), an der ein erster Steckerteil (1, 5) und ein zweiter Steckerteil (7, 10) befestigbar sind, wobei der zweite Steckerteil (7, 10) an einem Träger (11, 17) befestigt ist und wobei ein dritter Anschluss (18, 19) am Träger (11, 17) vorgesehen ist, **dadurch gekennzeichnet, dass** der zweite Steckerteil (7, 10) im Bereich eines Randes des Trägers (11, 17) angeordnet und zum Inneren des Trägers (11, 17) hin gewandt ist und dass der dritte Anschluss (19, 20) im Bereich des gleichen Randes des Trägers (11, 17) angeordnet und vom Träger (11, 17) weg gewandt ist.

2. Anschlusseinheit nach Anspruch 1, **dadurch gekennzeichnet, dass** an der Halterung (1a) eine Befestigungseinrichtung (1b) für den Träger (11, 17) angeordnet ist.

3. Anschlusseinheit nach Anspruch 2, **dadurch gekennzeichnet, dass** die Befestigungseinrichtung (1b) durch wenigstens eine Nut an der Halterung gebildet wird, in welche der Träger (11, 17) eingesteckt werden kann.

4. Anschlusseinheit nach Anspruch 3, **dadurch gekennzeichnet, dass** die Befestigungseinrichtung (1b) durch zwei gegenüber liegende Nuten gebildet wird, in welche der Träger (11, 17) eingesteckt werden kann.

5. Anschlusseinheit nach einem der Ansprüche 1 bis 4, **dadurch gekennzeichnet, dass** der Träger (11, 17) plattenförmig ausgeführt ist.

6. Anschlusseinheit nach Anspruch 5, **dadurch gekennzeichnet, dass** der Träger (11) eine Platine ist.

7. Anschlusseinheit nach Anspruch 6, **dadurch gekennzeichnet, dass** der zweite Steckerteil (10) ein optischer Sender und/oder Empfänger ist.

8. Anschlusseinheit nach einem der Ansprüche 1 bis 5, **dadurch gekennzeichnet, dass** der zweite Steckerteil (7, 17) ein Anschlussadapter ist.

9. Anschlusseinheit nach Anspruch 8, **dadurch gekennzeichnet, dass** der dritte Anschluss (20) vom Anschlussadapter (7, 17) gebildet wird.

10. Anschlusseinheit nach einem der Ansprüche 1 bis 7, **dadurch gekennzeichnet, dass** der dritte Anschluss (19) ein Daten-Interface ist.

11. Anschlusseinheit nach einem der Ansprüche 1 bis 10, **dadurch gekennzeichnet, dass** der erste Steckerteil ein Trägerelement (1) mit wenigstens zwei Ausnehmungen für Ferullen (4) mit optischen Anschlüssen sowie ein Fixierungselement (5) zum Festlegen der Ferullen (4) am Trägerelement (1) aufweist.

12. Anschlusseinheit nach Anspruch 11, **dadurch gekennzeichnet, dass** das Trägerelement (1) wenigstens drei Ausnehmungen für zwei Ferullen (4) aufweist und dass das Fixierungselement (5) zwei Ausnehmungen für die zwei Ferullen (4) aufweist.

13. Anschlusseinheit nach Anspruch 12, **gekennzeichnet durch** ein Set von Fixierungselementen (5), welche alle möglichen Kombinationen der beiden Ausnehmungen an den Fixierungselementen (5) mit Bezug zu den wenigstens drei Ausnehmungen am Trägerelement umfassen.
